# FASCICULE DE BREVET EUROPEEN

(11) **EP 3 022 076 B1**
(45) Date de publication et mention de la délivrance du brevet: **04.09.2019**
(21) Numéro de dépôt: 14741574.9
(22) Date de dépôt: 16.07.2014
(51) Int. Cl.: B60J 1/18, E05B 65/08, E05B 83/00, E05C 9/04, E05D 15/10, E05F 11/53

(54) **DISPOSITIF D'OBTURATION D'UNE BAIE D'UN VEHICULE AUTOMOBILE A PANNEAU COULISSANT, A POIGNEE MOBILE PARALLELEMENT A L'AXE DE COULISSEMENT ET ROUES DENTEES, ET VEHICULE CORRESPONDANT**
VORRICHTUNG ZUM VERSCHLIESSEN EINES RAUMS EINES KRAFTFAHRZEUGS MIT EINEM SCHIEBEPANEEL MIT EINEM GRIFF UND PARALLEL ZU SCHIEBEACHSE UND ZAHNRÄDERN BEWEGBAR SOWIE ENTSPRECHENDES FAHRZEUG
DEVICE FOR CLOSING OFF A BAY OF A MOTOR VEHICLE WITH A SLIDING PANEL, WITH A HANDLE MOVABLE PARALLEL TO THE SLIDING AXIS AND TOOTHED WHEELS, AND CORRESPONDING VEHICLE

(30) Priorité: 18.07.2013 FR 1357103
(43) Date de publication de la demande: 25.05.2016
(73) Titulaire: Advanced Comfort Systems France SAS - ACS France, 79302 Bressuire Cedex (FR)
(72) Inventeur: PATANCHON, Pierre, F-79300 Bressuire (FR); JEAN, Anthony, F-79300 Bressuire (FR); COURJARET, Grégoire, F-79140 Le Pin (FR)
(74) Mandataire: Vidon Brevets & Stratégie
(86) Numéro de dépôt international: PCT/EP2014/065282
(87) Numéro de publication internationale: WO 2015/007790

(56) Documents cités:
- EP-A1- 1 916 132
- EP-A2- 2 019 180
- FR-A1- 2 937 910
- GB-A- 192 747

## Description

### 1. Domaine de l'invention

Le domaine de l'invention est celui des baies de véhicule automobile. Plus précisément, l'invention concerne les dispositifs d'obturation d'une baie ménagée dans la carrosserie d'un véhicule, et comprenant une partie fixe rapportée de façon affleurante sur la carrosserie, par collage, et une partie mobile coulissante, essentiellement vitrée, susceptible de libérer ou de fermer une ouverture ménagée dans la partie fixe.

### 2. Techniques de l'art antérieur

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

Une autre technique est décrite notamment dans les documents de brevet EP 0 778 168 et EP 0 857 844, au nom du titulaire de la présente demande de brevet. Le dispositif d'obturation présenté dans ces documents (appelé aussi par la suite « baie flush ») comprend une partie fixe comportant une portion vitrée, et une partie mobile essentiellement vitrée par rapport à la partie fixe. La partie mobile est reliée à la partie fixe par des éléments fonctionnels, ou rails, qui permettent la mobilité requise et qui sont rapportés sur la face de la partie fixe tournée vers l'intérieur du véhicule.

Une telle « baie flush » peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP 1022 172.

Sur le plan esthétique, la « baie flush » présente, vu de l'extérieur, un aspect lisse, affleurant avec la carrosserie (d'où le terme « flush » souvent utilisé dans le domaine), du fait qu'aucun cadre n'est nécessaire entre les bords de la carrosserie et la « baie flush ».

Pour assurer un coulissement du panneau mobile, constitué généralement par un panneau transparent, les moyens fonctionnels comprennent un dispositif de guidage comportant un premier et un second rails de guidage montés fixes sur le panneau fixe de la baie, de part et d'autre de l'ouverture fermée par le panneau mobile. Celui-ci est monté sur les rails, pour coulisser selon une direction longitudinale, dans un plan de coulissement entre une (ou plusieurs) position(s) d'ouverture et une position intermédiaire de dégagement dans laquelle il est en regard de la baie et dégagé de celle-ci.

Selon diverses techniques particulières, des moyens assurent la liaison du panneau mobile avec les rails de guidage de façon à permettre un déplacement transversal du panneau mobile entre sa position intermédiaire de dégagement dans laquelle il est en regard et en retrait transversal de la baie, et sa position d'obturation dans laquelle il est enchâssé dans la baie.

De tels moyens de guidage permettent ainsi à la partie mobile de passer du plan formé par la partie fixe (position d'obturation) à un plan sensiblement parallèle de coulissement, et réciproquement.

Il est également possible de combiner les deux mouvements, sous la forme d'un mouvement louvoyant, selon lequel le bord distal (c'est-à-dire le bord éloigné des moyens de verrouillage, également appelé bord avant) de la partie mobile se trouve, en fin de course, dans le plan de la baie (la partie mobile étant alors « en travers », entre le plan d'obturation et le plan de coulissement). Il suffit alors de ramener, manuellement, le bord proximal (c'est-à-dire le bord proche des moyens de verrouillage, également appelé bord arrière) pour assurer l'obturation.

L'invention se rapporte plus particulièrement à ce type de dispositif d'obturation, à ses variantes et ses perfectionnements.

Plusieurs solutions ont été proposées, notamment par le Demandeur, pour le verrouillage de la partie mobile dans la position fermée, et le cas échéant, dans des positions d'ouverture choisies. Elles sont souvent peu ergonomiques et/ou peu pratiques et nécessitent notamment de procéder à un effort, par exemple de serrage ou de rotation pour obtenir le verrouillage et/ou le déverrouillage. Notamment, elles présentent généralement de présenter des surfaces de préhension de taille réduite, imposée par la normalisation qui impose une taille limite (par exemple inférieure ou égale à 23 mm) pour les éléments faisant saillie vers l'intérieur du véhicule. Ces dimensions rendent difficiles l'action de déverrouillage et/ou le guidage en coulissement.

Un autre inconvénient des techniques connues est que, pour permettre d'effectuer avec une même poignée (ou avec un même ensemble de poignées, dans le cas où deux éléments de poignée sont proposés) les opérations de déverrouillage et de déplacement, il est généralement nécessaire de prévoir des moyens complexes pour l'actionnement, la transmission de l'action vers les pênes, le rappel dans une position de repos,... De plus, le montage, qui suppose de nombreuses pièces, est complexe et peut nécessiter des réglages particuliers.

De tels inconvénients se retrouvent, par exemple, dans la solution proposée dans le document de brevet EP 1 916 132 qui propose d'engendrer le déplacement des moyens de verrouillage/déverrouillage par le biais d'une pluralité de leviers couplés d'une part à une poignée d'actionnement et d'autre part aux moyens de verrouillage/déverrouillage.

Pour tenter de résoudre ces problèmes, il a également été proposé, dans le document de brevet EP 2196341, de monter une poignée d'actionnement de façon qu'elle s'étende à partir de l'un desdits bords latéraux de la portion de cadre. On respecte ainsi l'obligation relative à une dimension limite de la poignée, vers l'intérieur du véhicule.

La solution proposée est relativement simple, techniquement, car le déplacement des deux membres de la poignée est parallèle au déplacement des pênes. Cependant, ce mode d'actionnement n'apparaît pas ergonomique ni intuitif, par rapport au déplacement du panneau en coulissement, une fois déverrouillée.

D'autres solutions sont illustrées. Cependant, aucune information technique n'est précisée pour leur mise en oeuvre, et celle-ci s'avère peu aisée en pratique. En effet, un déplacement transversal de la poignée dans le cadre suppose la présence de moyens particuliers pour transformer ce déplacement en une action sur les pênes, qui imposent pour la plupart un débattement important de la poignée, et/ou la présence dans son prolongement de moyens de transmission. Ceci conduit à une largeur très importante de
la portion de cadre portant la poignée, nuisible notamment à l'esthétique de l'ensemble et au clair de baie.

En outre, ces moyens ne garantissent généralement pas une homogénéité du déplacement des deux pênes, si la poignée n'est pas actionnée de façon parfaitement centrée et rectiligne, ce qui peut entraîner des blocages et/ou des difficultés de déverrouillage.

### 3. Objectifs de l'invention

Il existe donc un besoin d'un mécanisme simple et efficace, pour contrôler le verrouillage et le déverrouillage du panneau mobile d'un dispositif d'obturation d'une baie, qui soit simple, fiable et efficace.

Ainsi, selon un aspect particulier de l'invention, un objectif est également de fournir un tel dispositif, plus efficace et plus simple que ceux de l'art antérieur.

L'invention a également pour objectif de fournir un dispositif d'obturation d'une baie qui permette un verrouillage et un déverrouillage, et plus généralement une ouverture et une fermeture, aisés, intuitifs et sans effort important.

L'invention a encore pour objectif de fournir un dispositif d'obturation d'une baie qui soit simple à réaliser et à monter sur un véhicule.

Selon au moins certains modes de réalisation, un autre objectif de l'invention est de fournir un dispositif d'obturation d'une baie qui conserve l'ensemble des avantages des "baies flush" déjà développées par le titulaire de la présente demande, et notamment :
- Aspect esthétique affleurant ;
- Aspects aérodynamiques;
- Facilité et coût réduit de fabrication ;
- Facilité et coût réduit de montage.

Un autre objectif particulier de l'invention est, au moins dans certains modes de réalisation, de fournir un tel dispositif d'obturation qui permette d'obtenir un clair de baie (c'est-à-dire de la surface transparente du véhicule) important, et donc notamment de limiter l'encombrement du cadre du panneau mobile.

Encore un autre objectif particulier de l'invention est, au moins dans certains modes de réalisation, de fournir un tel dispositif d'obturation qui soit peu encombrant et à faible débattement, tout en respectant les contraintes normatives et en offrant une bonne ergonomie.

### 4. Caractéristiques principales et optionnelles de l'invention

Tout ou partie de ces objectifs, ainsi que d'autres qui apparaîtront par la suite, sont atteints à l'aide d'un dispositif d'obturation d'une baie formée dans un élément de carrosserie d'un véhicule automobile, comprenant une partie fixe et au moins un panneau mobile par rapport à ladite partie fixe, guidé en coulissement par deux rails portés par ladite partie fixe, ledit panneau mobile portant deux pênes aptes à coopérer avec deux gâches correspondants, formés respectivement dans chacun desdits rails, et mobiles selon une direction de déverrouillage perpendiculaire à la direction de coulissement dudit panneau mobile, entre une position de verrouillage dans laquelle lesdits pênes sont en prise avec lesdites gâches, et une position de déverrouillage, permettant le coulissement, dans laquelle lesdits pênes sont extraits desdites gâches.

Selon l'invention, ledit panneau mobile porte une poignée d'actionnement desdits pênes, mobile selon une direction d'actionnement parallèle à ladite direction de coulissement, et des moyens de renvoi d'angle mettant en oeuvre au moins une roue dentée pour contrôler le déplacement d'un desdits pênes.

On dispose ainsi d'un mécanisme simple et efficace, et aisé à manipuler. Le déverrouillage est simple et ergonomique, car il se fait dans le sens du mouvement d'ouverture du panneau mobile. En outre, l'action de déverrouillage permet, si nécessaire, un effort en Y, permettant en cas de besoin de décoller le joint.

Selon un mode de réalisation particulier de l'invention, chacun desdits pênes est solidaire d'une première crémaillère s'étendant parallèlement à ladite direction de déverrouillage et en ce que ladite poignée est solidaire de deux secondes crémaillères s'étendant parallèlement à ladite direction d'actionnement. Au moins une roue dentée assure l'interconnexion d'une des premières crémaillères avec une des secondes crémaillères.

Selon une première variante, lesdites secondes crémaillères sont orientées vers l'intérieur de ladite poignée, et en ce qu'une unique roue dentée assure l'interconnexion d'une des premières crémaillères avec une des secondes crémaillères.

Selon une deuxième variante, lesdites secondes crémaillères sont orientées vers l'extérieur de ladite poignée, et en ce qu'au moins deux roues dentées en prise assurent l'interconnexion d'une des premières crémaillères avec une des secondes crémaillères.

Selon les modes de réalisation, au moins une première desdites roues dentées peut être une roue double, comprenant deux portions coaxiales présentant des diamètres et/ou des nombres de dents différents.

Ceci peut permettre d'adapter, si nécessaire, la démultiplication. Il est également possible d'utiliser une combinaison de roues dentées pour modifier cette démultiplication.

Selon un aspect particulier, ledit panneau mobile porte au moins une portion de cadre s'étendant sensiblement entre les extrémités desdits pênes, et présentant une ouverture sur sa face latérale s'étendant vers l'extérieur dudit panneau mobile et/ou sur sa façade, permettant le déplacement de ladite poignée.

De façon complémentaire, ladite portion de cadre porte, sur sa face latérale s'étendant vers l'intérieur dudit panneau mobile, au moins une zone de préhension complémentaire.

Selon une autre caractéristique particulière, ledit panneau mobile peut porter au moins un élément de guidage de ladite poignée selon ladite direction d'actionnement.

Selon un aspect particulier de l'invention, le dispositif comprend des moyens de rappel agissant sur chacun desdits pênes, et tendant à les ramener dans ladite position de verrouillage, et lesdits moyens de transmission sont adaptés pour ramener ladite poignée dans une position sortie, lorsque lesdits moyens de rappel ramènent lesdits pênes dans ladite position de verrouillage.

L'invention concerne également les véhicules automobiles comprenant au moins un dispositif d'obturation tel que décrit ci-dessus.

### 5. Liste des figures

D'autres caractéristiques et avantages de l'invention apparaîtront plus clairement à la lecture de la description suivante d'un mode de réalisation préférentiel, donné à titre d'exemple illustratif non limitatif, et des dessins annexés, parmi lesquels :
- la figure 1 illustre schématiquement une « baie flush » mettant en oeuvre l'invention ;
- les figures 2A et 2B illustrent plus précisément le panneau mobile de la « baie flush » de la figure 1 selon un premier mode de réalisation, une portion du cadre ayant été retirée sur la figure 2B, de façon à distinguer le mécanisme ;
- les figures 3A et 3B sont des vues agrandies d'une portion des figures 2A et 2B, présentant la poignée et du mécanisme de déverrouillage, dans la position verrouillée ;
- les figures 4A et 4B sont des vues agrandies de la même portion des figures 2A et 2B, présentant la poignée et du mécanisme de déverrouillage, dans la position déverrouillée ;
- les figures 5A et 5B illustrent un deuxième mode de réalisation de l'invention, respectivement en position verrouillée et en position déverrouillée ;
- les figures 6A et 6B présentent un exemple de poignée et d'une portion de cadre, pouvant être adapté au deux modes de réalisation ;
- les figures 7A et 7B illustrent une variante d'implantation de la poignée de commande, accessible en façade du cadre.

### 6. Exemples de mise en oeuvre

### 6.1 présentation générale d'une « baie flush »

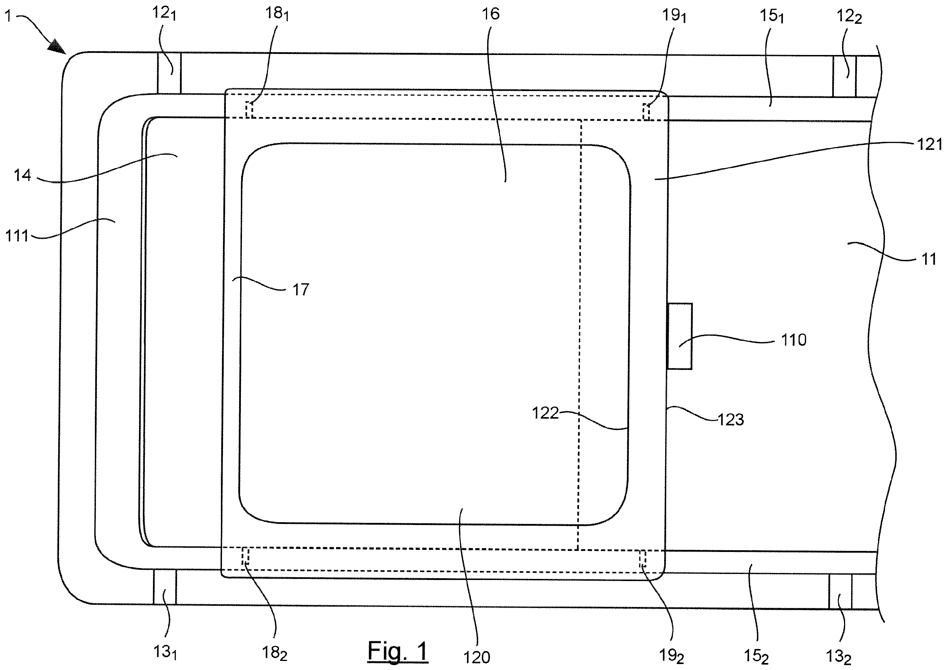

Un exemple de dispositif d'obturation 1 d'une baie formée dans un élément de carrosserie d'un véhicule automobile (ou « baie flush ») conforme à l'invention est illustré schématiquement sur la figure 1.

Une telle « baie flush » comprend tout d'abord une partie fixe 11, par exemple totalement ou essentiellement vitrée. Comme cela apparaît sur la figure 1, qui présente le côté destiné à être orienté vers l'intérieur du véhicule, la périphérie du panneau fixe 11 est libre (à l'exception des éléments 12₁, 12₂, 13₁ et 13₂ dont les fonctions sont rappelées ci-après). Ainsi, le dispositif d'obturation de la figure 1 peut être rapporté directement sur les bords d'une baie définie dans la carrosserie d'un véhicule depuis l'extérieur de celui-ci. Ces bords de la baie sont préférentiellement réalisés avec un léger retrait, correspondant sensiblement à l'épaisseur de la partie fixe 11, pour que celle-ci affleure avec le reste de la carrosserie, lorsqu'elle est montée sur le véhicule.

Notamment, la baie peut être formée dans une paroi latérale du véhicule (par exemple pour les véhicules utilitaires, les monospaces, les breaks,...), dans une paroi orientée vers l'arrière du véhicule (par exemple pour les « pick-up »), ou encore dans une portière (dans ce cas, les bords de la baie peuvent être en partie formés par des éléments de réception s'étendant depuis le caisson de la portière, le dispositif étant alors rapporté sur le bord supérieur du caisson et sur les éléments de réception qui s'étendent de celui-ci).

Un joint, ou cordon, de colle (non représenté) est placé sur le pourtour de la partie fixe, ou sur les bords de la baie de la carrosserie, et la périphérie de la partie fixe 11 est ainsi directement solidarisée par collage, aux bords de la baie, sans qu'il soit nécessaire de prévoir un cadre ou tout autre élément de liaison intermédiaire. Le cordon de colle assure également, avantageusement une fonction d'étanchéité.

Une ouverture 14 est réalisée dans la partie fixe 11. Comme on le voit sur la figure 1, les bords de cette ouverture 14 sont éloignés de la périphérie de la partie fixe 11, pour permettre la solidarisation de celle-ci aux bords de la baie, comme expliqué ci-dessus.

La partie fixe 11 peut être réalisée sous la forme d'un seul élément vitré, en verre ou en plastique adapté à une application à l'automobile, dans lequel est réalisée l'ouverture 14. Par vitré, on entend ici tout matériau apte à laisser passer au moins partiellement la lumière (matériau transparent, translucide, teinté,...).

La partie fixe 11 peut également être réalisée en plusieurs éléments constitutifs, ces éléments pouvant alors définir chacun un ou plusieurs côtés de l'ouverture 14. Une telle approche permet notamment de simplifier la réalisation de l'ouverture 14 dans un panneau de verre. Bien sûr, dans ce cas, les différents éléments constitutifs de la partie fixe se trouvent dans un même plan (qui peut, dans certains cas, être courbe, ou incurvé, dans au moins une dimension, par exemple pour suivre un galbe de la carrosserie). En effet, vue de l'extérieur, la partie fixe doit présenter un aspect lisse, ou affleurant.

La solidarisation de ces différents éléments constitutifs peut se faire par tout moyen adapté, par exemple par collage. Les rails 15₁ et 15₂ peuvent participer à cette solidarisation. Il est possible, sans sortir de l'invention, que l'un des éléments de la partie fixe ne soit pas vitré.

Selon une variante, la partie fixe 11 peut comprendre un élément de support, par exemple en par exemple en matière plastique, définissant notamment la périphérie de la partie fixe, et percée de deux ouvertures, l'une étant fermée de façon définitive par un élément vitré monté fixe, et la seconde correspondant à l'ouverture 14. L'élément de support et l'élément vitré fixe se trouvent dans le même plan, de façon à définir une surface lisse, vue de l'extérieur.

Le dispositif d'obturation comprend encore une partie mobile 16, pouvant venir obturer ou dégager l'ouverture 14. Cette partie mobile 16 comporte une portion vitrée 20, une portion de cadre, notamment un cadre 17 dans l'exemple illustré et un dispositif de verrouillage / déverrouillage. La partie mobile 16 est maintenue et guidée par les deux rails 15₁, 15₂, qui sont montés sur la face de la partie fixe orientée vers l'intérieur de véhicule et éloignés de la périphérie de cette partie fixe, pour les raisons déjà expliquées plus haut.

La partie mobile 16 peut être déplacée (ou se déplacer, si des moyens de motorisation sont prévus) le long des rails 15₁, 15₂, dans un plan de coulissement sensiblement parallèle au plan défini par la partie fixe 11. Ainsi, la partie mobile 16 peut prendre une ou plusieurs positions d'ouverture, selon sa position par rapport aux rails 15₁, 15₂.

Par ailleurs, la partie mobile 16 peut se déplacer perpendiculairement au plan défini par la partie fixe 11, de façon à venir obturer l'ouverture 14, dans une position fermée, dans laquelle elle affleure avec cette partie fixe 11, de façon à proposer un ensemble affleurant (carrosserie, partie fixe et partie mobile).

La face du panneau fixe tournée vers l'intérieur du véhicule porte par ailleurs un joint d'étanchéité (non représenté sur la figure 1) collé sur le contour de l'ouverture 14, dont l'extrémité de la lèvre vient prendre appui sur le panneau mobile 16, lorsque celui-ci est en position d'obturation. Dans une variante, le joint d'étanchéité peut être monté sur le cadre 17, pour venir en contact avec la partie fixe 11.

Le mouvement de la partie mobile 16 par rapport à la partie fixe 11 peut, selon une première approche, se décomposer en deux déplacements indépendants :
- un déplacement perpendiculaire par rapport au plan formé par la partie fixe, permettant le passage d'une position fermée et verrouillée, dans laquelle la partie mobile se trouve dans le même plan que la partie fixe et l'ouverture, à une position de libération, dans laquelle la partie mobile est décalée par rapport à la partie fixe dans un plan de coulissement, de façon à permettre ce coulissement ;
- un déplacement dans le plan de coulissement, parallèle au plan formé par la partie fixe.

D'autres mouvements sont bien sûr possibles. Ainsi, selon une deuxième approche, la partie mobile peut louvoyer, c'est-à-dire suivre une courbe selon laquelle les deux mouvements (verrouillage / déverrouillage et coulissement) sont liés au moment de l'ouverture et de la fermeture.

Les rails 15₁ et 15₂ peuvent être solidarisés à la partie fixe 11 par collage ou par tout autre moyen adapté. Ils peuvent également être directement formés, par exemple par moulage ou surmoulage, sur la partie fixe 11. Ils sont généralement dissimulés, de même que les autres éléments fonctionnels, par de la sérigraphie, empêchant qu'on les voit depuis l'extérieur du véhicule.

Dans certains cas, les rails peuvent être non parallèles.

Par ailleurs, il est important, pour des raisons de sécurité (et en conséquence d'homologation au regard d'aspects réglementaires et/ou législatifs relatifs à la sécurité des véhicules) que les rails 15₁, 15₂ soient solidarisés à la carrosserie, et plus précisément aux bords de la baie. En effet, selon le règlement européen EC43 par exemple, il est imposé que, en cas de bris de verre (en l'occurrence de la partie fixe 11), les éléments susceptibles d'être projetés présentent une taille et/ou un poids inférieur à une limite prédéterminée, fortement dépassée par les rails ou la partie mobile. On comprend cependant, que si rien n'est prévu, en cas de bris de la partie fixe 11, ni les rails 15₁, 15₂ ni le panneau mobile 16 ne seront maintenus. Ils seront donc projetés, et risquent donc de blesser un passager du véhicule ou un passant.

Comme cela a été proposé dans le document de brevet EP 0 778 168, le titulaire de la présente demande a donc proposé d'équiper les rails 15₁, 15₂ de prolongement 12₁, 12₂, 13₁, 13₂, qui s'étendent sur la face tournée vers l'intérieur du véhicule de la partie fixe 11, de façon à être pris en sandwich entre le bord de la partie fixe 11 et le bord correspondant de la baie de la carrosserie.

Ainsi, le cordon de colle solidarisant la partie fixe 11 à la carrosserie solidarise également ces prolongements 12₁, 12₂, 13₁, 13₂ au bord de la carrosserie du véhicule. En conséquence, même lorsque la partie fixe 11 est brisée, et donc absente, les rails 15₁ et 15₂ sont maintenus en place par rapport à la carrosserie à l'aide de ces prolongements. Les rails 15₁ et 15₂ maintiennent quant à eux la partie mobile 16.

Ces prolongements peuvent être formés par moulage directement dans le rail, ou être rapportés sur celui-ci par tout moyen adéquat, par exemple par collage ou clippage.

Le rail inférieur 15₂ porte des prolongements 13₁, 13₂ présentant par ailleurs une ouverture suffisante pour permettre l'évacuation de l'eau recueillie dans le rail 15₂, correspondant par exemple à la condensation dans le véhicule. Cette eau est ainsi simplement et efficacement évacuée à l'extérieur du véhicule, sans que cela ne nuise à l'étanchéité. Les fonctions de maintien en cas de bris et d'évacuation de l'eau, peuvent bien sûr être assurées par des éléments distincts.

Selon le mode de réalisation illustré, les deux rails 15₁ et 15₂ sont formés dans une même pièce comprenant un élément de liaison 111, s'étendant entre les deux rails, le long d'un bord de la partie mobile 16. Cette pièce est collée à la partie fixe 11.

Le cadre 17 s'étend sur la face de la partie mobile 16 orientée vers l'intérieur du véhicule. Ce cadre ne s'étend pas sur l'autre face, de façon à préserver l'aspect affleurant. Dans l'exemple illustré, le cadre 17 entoure la portion vitrée 120 sur la face de la partie mobile orientée vers l'intérieur du véhicule. Le cadre 17 présente une surface principale 21 sensiblement parallèle au plan défini par la portion vitrée 20 et deux bords latéraux 122 et ,23 dont l'un au moins, en l'occurrence le bord latéral 122, relie le cadre 17 à la portion vitrée. Les bords latéraux 122 et 123 sont, dans l'exemple illustré, sensiblement perpendiculaires au plan défini par la portion vitrée 120.

Dans l'exemple illustré, le cadre 17 porte au moins un pion de guidage supérieur 18₁ et un pion de guidage inférieur 18₂ prévus pour être guidés dans une coulisse correspondante formée respectivement dans les rails 15₁ et 15₂.

D'autres pions peuvent être également prévus pour le guidage souhaité.

Dans le mode de réalisation illustré, le guidage est complété par des pions complémentaires 19₁, 19₂ qui assurent simultanément une fonction de pêne, coopérant avec des gâches prévues à cet effet dans les rails 15₁ et 15₂ de façon à verrouiller la partie mobile 16 dans sa position fermée (et le cas échéant dans une ou plusieurs positions d'ouverture prédéterminées, des gâches correspondantes étant alors ménagées dans les rails aux emplacements adéquats).

### 6.2 poignée de déverrouillage

L'invention concerne en particulier cet aspect, et plus généralement l'actionnement des deux pênes (qu'ils assurent ou non également une fonction de guidage en coulissement, et/ou une fonction de butée d'ouverture maximum). Une poignée d'actionnement 110 apte à agir sur les pênes est montée sur le cadre 17, pour actionner le déverrouillage des pênes, selon la technique décrite par la suite, et permettre de faire coulisser la partie mobile 16.

Conformément à l'invention, la poignée d'actionnement 110 s'étend à partir de l'un des bords latéraux 122 et 123 du cadre 17, et non pas de sa surface principale 121. Ainsi, la poignée ne s'étend pas vers l'intérieur du véhicule, et la contrainte de longueur limitée dans cette dimension est respectée.

Dans l'exemple illustré, la poignée d'actionnement 110 s'étend à partir du bord latéral 123 du cadre 17. Des approches différentes, notamment avec une accessibilité partielle ou totale en façade sont possibles, comme illustré par la suite.

Le bord latéral 23 forme le pourtour extérieur du cadre 17. On ne sort pas de l'invention si le cadre 17 constitue seulement une portion de cadre (s'étendant par exemple uniquement sur la portion recouvrant les moyens reliant la poignée aux pênes) et non un cadre entourant complètement la portion vitrée mobile 120.

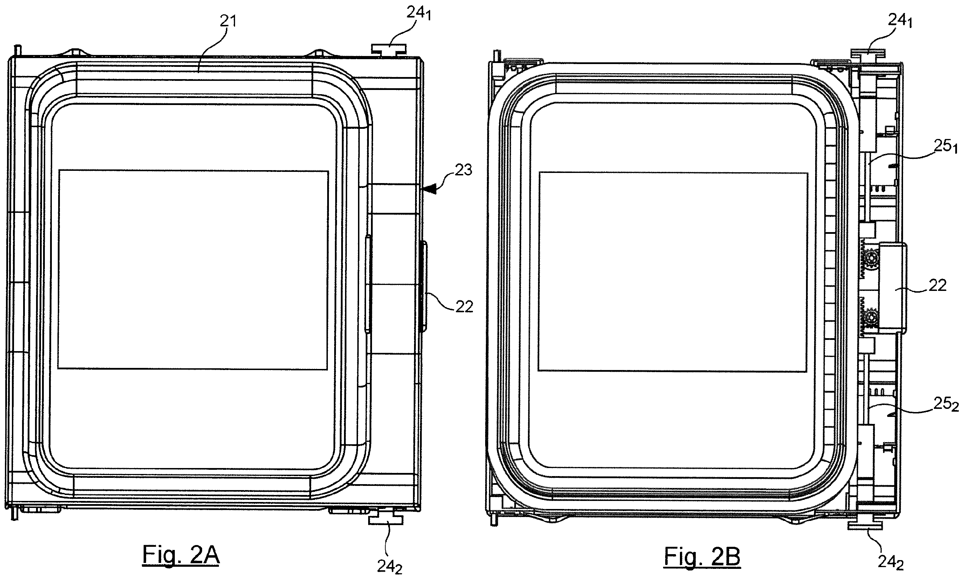

Les figures 2A et 2B illustrent un exemple de panneau coulissant selon l'invention, vu de l'intérieur du véhicule, respectivement avec un élément de cadre 21 en place (figure 2A), et avec cet élément de cadre retiré (figure 2B) pour distinguer le mécanisme. Dans ce mode de réalisation, la largeur de la portion de cadre portant la poignée d'actionnement 22 peut être relativement réduite, par exemple une largeur de 50 mm, de façon à conserver un clair de baie acceptable.

Comme on le voit sur la figure 2A, lorsque le cadre 21 est assemblé, une poignée, ou bouton, d'actionnement 22 est accessible sur un bord latéral 23. Une ouverture a été ménagée dans ce bord latéral, pour permettre le déplacement de la poignée dans la direction X. Des moyens de guidage complémentaire (non représentés) peuvent être prévus dans le cadre, pour contrôler un déplacement linéaire selon cette direction X.

Au repos, c'est-à-dire lorsqu'aucune action n'est appliquée sur cette poignée, celle-ci dépasse sensiblement de ce bord latéral 23, par exemple de 15 millimètres environ. Dans cette position, les pênes 24₁ et 24₂ sont dans la position verrouillée, aptes à coopérer avec les gâches correspondantes prévues à cet effet dans les rails.

Le déverrouillage des deux pênes est obtenu en appuyant sur la poignée 22, de façon qu'elle pénètre dans le cadre, et commande le retrait des pênes 24₁ et 24₂. C'est cette position déverrouillée qui est illustrée sur les figures 2A et 2B.

### 6.3 premier mode de réalisation

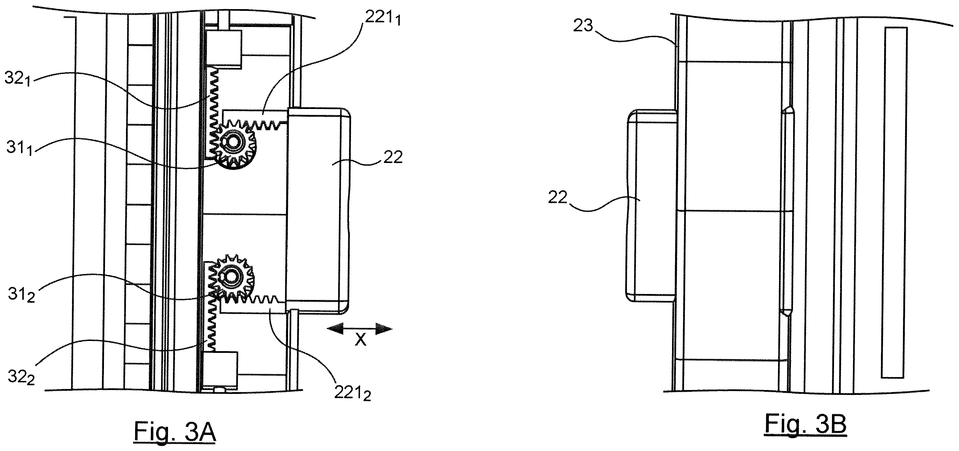

Comme on le voit sur la figure 2B, la poignée 22 agit sur les pênes 24₁ et 24₂ par l'intermédiaire de crémaillères et de pignons, ou roues dentées, dont le fonctionnement est maintenant expliqué, selon un premier mode de réalisation, en relation avec les figures 3A à 4B.

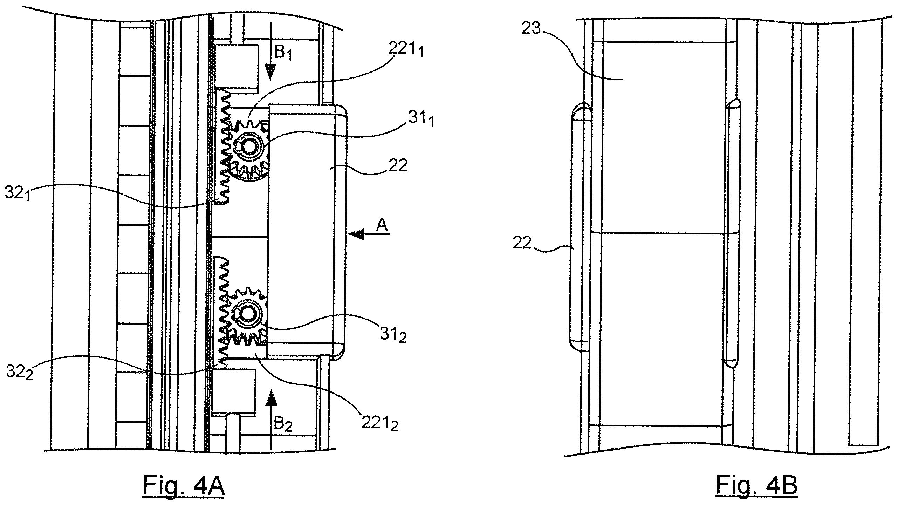

Plus précisément, les figures 3A et 3B présentent la position verrouillée, dans
les figures 4A et 4B présentent la position déverrouillée, dans laquelle la poignée 22 est pénètre presque intégralement dans le bord latéral 23.

La poignée 22 porte deux premières crémaillères 221₁ et 221₂, orientées vers l'intérieur de la poignée (c'est-à-dire que les dents de crémaillère 221₁ agissant sur le pêne supérieur 24₁ sont dirigées vers le bas, et que les dents de crémaillère 221₂ agissant sur le pêne inférieur 24₁ sont dirigées vers le haut). Ces crémaillères 221₁ et 221₂, agissent chacune respectivement sur une roue dentée 31₁ et 31₂, montée mobile en rotation autour d'un axe prévu à cet effet dans le cadre.

Les pênes 24₁ et 24₂ sont quant à eux prolongés jusqu'au niveau de la poignée 22. Ces prolongements 25₁ et 25₂ se terminent par deux secondes crémaillères 32₁ et 32₂, qui viennent respectivement en prises avec les roues dentées 31₁ et 31₂. Ainsi, la crémaillère 221₁ est reliée à la crémaillère 32₁, par l'intermédiaire de la roue dentée 31₁, et la crémaillère 221₂ est reliée à la crémaillère 32₂, par l'intermédiaire de la roue dentée 31₂.

Comme on le voit sur la figure 4A, lorsque l'on appuie (flèche A) sur la poignée 22, pour passer dans la position déverrouillée, la poignée 22 pénètre à l'intérieur du cadre. Les crémaillères 221₁ et 221₂, sont donc également déplacées, dans le sens de la flèche A et entraînent en conséquence les roues dentées 221₁ et 221₂, en rotation. Cette rotation entraîne en conséquence le déplacement des crémaillères 32₁ et 32₂, respectivement dans les directions B₁ et B₂. Les deux pênes 24₁ et 24₂ sont alors extraits des gâches correspondantes, et la baie peut être déplacée en coulissement. Cette position déverrouillée correspond à celle illustrée par la figure 2B.

On obtient ainsi un renvoi d'angle efficace, du déplacement en X de la poignée 22, pour agir en Y sur les pênes 24₁ et 24₂. Le système à crémaillères et roues dentées garantit que les déplacements des deux pênes sont symétriques. Les courses des pênes sont identiques, et égales à celle de la poignée, dans ce mode de réalisation.

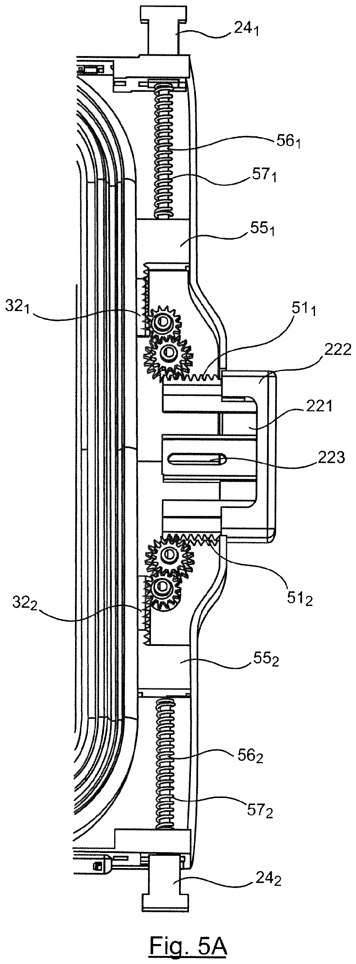

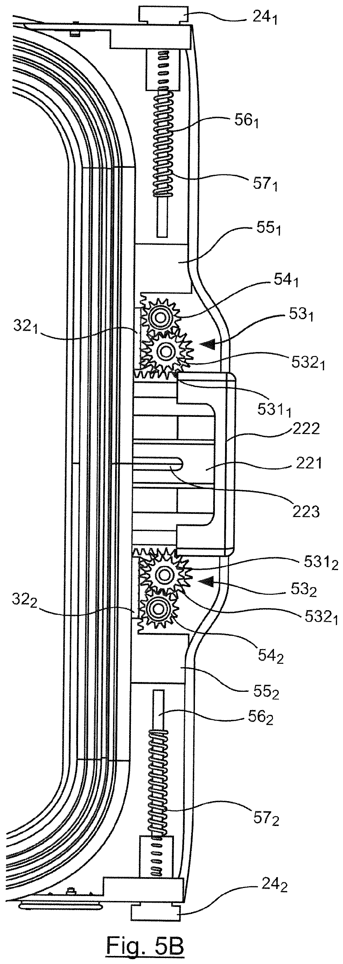

Selon d'autres modes de réalisation, il est possible de prévoir une démultiplication adaptée, pour allonger ou réduire la course de la poignée par rapport à celle des pênes, en utilisant plusieurs roues dentées (en nombre impair) entre une première et une seconde crémaillères. Il est également possible de modifier cette démultiplication en utilisant des roues doubles, présentant deux portions coaxiales de diamètres et/ou de nombres de dents différents (voir un exemple figures 5A et 5B).

Les pênes 24₁ et 24₂ sont équipées de moyens de rappel, non représentés sur ces figures (voir les figures 5A et 5B pour un exemple). Ces moyens de rappel tentent à ramener les pênes dans la position verrouillée, en l'absence d'action d'un utilisateur.

La transmission assurée par les crémaillères et les roues dentées assurent, sous l'effet de ces moyens de rappel, le retour du bouton 22 dans la position verrouillée (figure 3A et 3B) sans qu'il soit nécessaire de prévoir de moyens de rappel spécifiques pour cette poignée.

### 6.4 deuxième mode de réalisation

Les figures 5A et 5B présentent une variante de l'approche précédente dans laquelle les crémaillères 51₁ et 51₂ solidaires de la poignée 22 sont orientées vers l'extérieur de la poignée, c'est-à-dire vers les pênes 24₁ et 24₂ auxquels elles sont respectivement associées (alors qu'elles étaient orientées dans des sens opposés, dans le mode de réalisation précédent).

Le principe de transmission par renvoi d'angle aux secondes crémaillères 32₁ et 32_{2,,} est similaire au précédent mode de réalisation, si ce n'est qu'il est nécessaire de prévoir deux roues dentées 53₁, 54₁, 53₂, 54₂, pour chaque pêne (plus généralement un nombre pair), pour que l'actionnement de la poignée selon la flèche A, entraîne la libération des pênes 24₁ et 24₂, selon les directions B₁ et B₂.

Dans ce mode de réalisation, les roues dentées 53₁ et 53₂ sont des roues dentées doubles, présentant une roue inférieure et une roue supérieure coaxiale. Les roues inférieures 531₁ et 531₂ sont connectées aux crémaillères 51₁ et 51₂ respectivement, et les roues supérieures 532₁, 532₂ sont reliées aux roues dentées 54₁, 54₂ respectivement, qui entraînent elles-mêmes les crémaillères 32₁ et 32₂.

On peut noter que les pênes 24₁ et 24₂ sont reliées respectivement aux crémaillères 32₁, 32₂ par une portion de guidage 55₁ et 55₂ dont les dimensions coïncident avec la largeur disponible à l'intérieur du cadre (une zone de guidage pouvant être définie dans celui-ci) pour contrôler que la course des pênes est bien rectiligne, et perpendiculaire à celle de la poignée. Cet élément de guidage 55₁, 55₂ est relié aux pênes 24₁ et 24₂ respectivement par une tige cylindrique 56₁, 56₂, qui porte un ressort de rappel 57₁, 57₂, qui assure le retour automatique des pênes dans leur position verrouillée (et, par l'intermédiaire de la transmission, le retour du bouton 22 dans la position correspondante de la figure 5A).

Cette structure peut bien sûr être mise en oeuvre dans le premier mode de réalisation. Plus généralement, de nombreux modes de réalisation peuvent adaptés, dès lors que les pênes sont structurellement fixes par rapport aux secondes crémaillères, notamment en fonction de la place disponible.

### 6.5 exemples de poignée

On peut noter par ailleurs sur ce deuxième mode de réalisation que la poignée 22 est ici réalisée en (au moins) deux parties, une partie interne 221, technique, portant les deux crémaillères, et une portion externe 222, d'actionnement.

La partie interne 221 présente une lumière 223, qui peut coopérer avec un ergot formé dans le cadre, pour contrôler la direction de la course du bouton, et limiter celle-ci.

Cette approche peut bien sûr être mise en oeuvre dans le premier mode de réalisation. Inversement, la poignée du premier mode de réalisation peut être utilisée dans le deuxième mode de réalisation. Plus généralement, la poignée peut être adaptée, en fonction des besoins, dès lors qu'elle présente deux premières crémaillères.

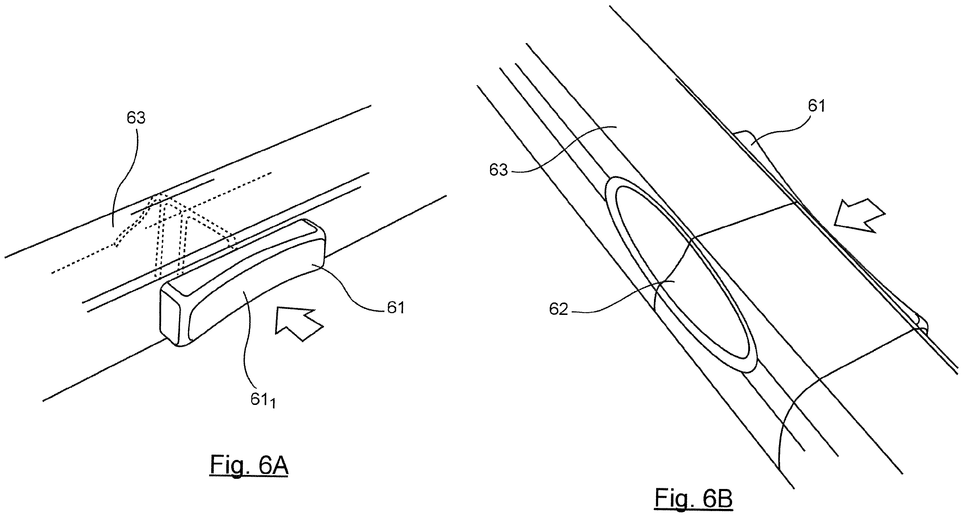

Les figures 6A et 6B illustrent, à titre d'exemple, une telle poignée 61, dont la surface d'appui 611 est concave, pour faciliter la prise en main. On peut en outre prévoir un bossage 62, par exemple en creux, sur une partie du cadre 63 opposée à la poignée, formant zone de préhension complémentaire, toujours pour faciliter la prise en main, faciliter la compréhension du mécanisme et permettre en un même mouvement le déverrouillage puis le déplacement en coulissement du panneau mobile.

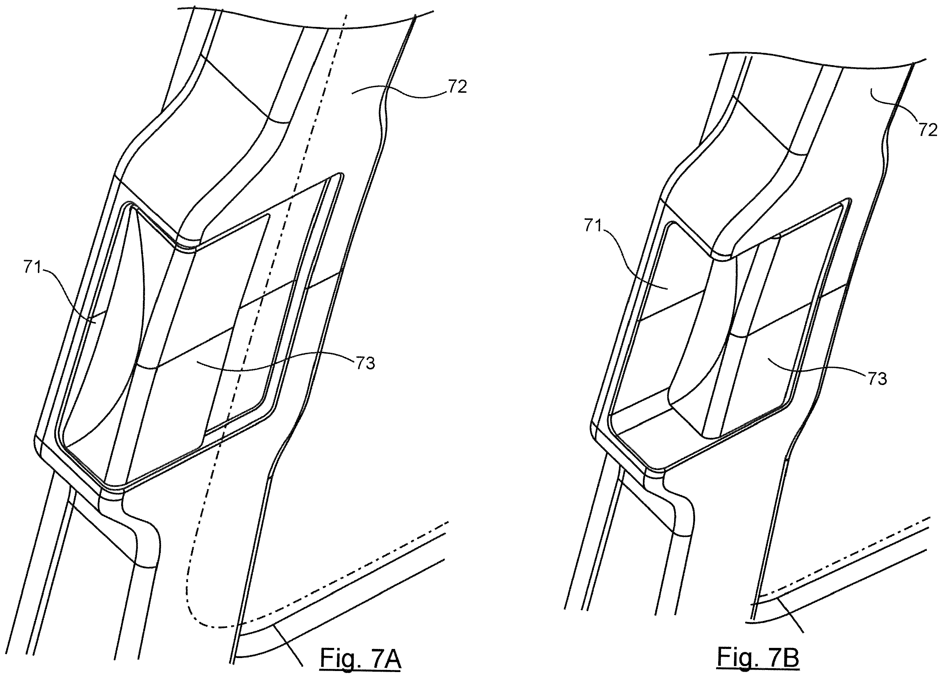

Il n'est bien sûr pas impératif que l'ouverture du cadre permettant le passage de la poignée soit uniquement sur le côté du cadre, comme illustré sur ces figures 6A et 6B. La poignée peut également être accessible en façade, comme illustré sur les figures 7A et 7B, présentant la poignée respectivement en position verrouillée et en position déverrouillée.

Sur ces figures, on constate que l'on a ménagé un logement 71 dans le montant 72 du cadre, pour recevoir et guidé la poignée 73. Celle-ci est donc aisément accessible, par le côté et/ou en façade. Le montant 72 du cadre est élargi, au niveau de cette poignée, pour loger intégralement celle-ci, dans toutes ses positions. Le logement 72 permet par ailleurs de contrôler le guidage rectiligne de la poignée 73.

Il serait également possible que le logement 71 ne soit accessible qu'en façade, et par exemple qu'il soit fermé par une paroi sur le côté. Dans ce cas, la surface de la poignée peut recevoir un bossage en creux, ou un autre élément facilitant l'actionnement.

## Revendications

1. Dispositif d'obturation (1) d'une baie formée dans un élément de carrosserie d'un véhicule automobile, comprenant une partie fixe (11) et au moins un panneau mobile (16) par rapport à ladite partie fixe (11), guidé en coulissement par deux rails (15₁, 15₂) portés par ladite partie fixe (11),
ledit panneau mobile (16) portant deux pênes (24₁, 24₂) aptes à coopérer avec deux gâches correspondants, formés respectivement dans chacun desdits rails (15₁, 15₂), et mobiles selon une direction de déverrouillage perpendiculaire à la direction de coulissement dudit panneau mobile (16), entre une position de verrouillage dans laquelle lesdits pênes (24₁, 24₂) sont en prise avec lesdites gâches, et une position de déverrouillage, permettant le coulissement, dans laquelle lesdits pênes (24₁, 24₂) sont extraits desdites gâches,
ledit panneau mobile (16) portant une poignée d'actionnement (22, 110) desdits pênes (24₁, 24₂), mobile selon une direction d'actionnement parallèle à ladite direction de coulissement, et des moyens de renvoi d'angle
**caractérisé en ce que** lesdits moyens de renvoi d'angle mettent en oeuvre au moins une roue dentée (31₁, 31₂, 53₁, 54₁, 53₂, 54₂) pour contrôler le déplacement d'un desdits pênes (24₁, 24₂), et
**en ce que** chacun desdits pênes (24₁, 24₂) est solidaire d'une première crémaillère (32₁, 32₂) s'étendant parallèlement à ladite direction de déverrouillage et **en ce que** ladite poignée (22) est solidaire de deux secondes crémaillères (51₁, 51₂, 221₁, 221₂) s'étendant parallèlement à ladite direction d'actionnement,
au moins une roue dentée (31₁, 31₂, 53₁, 54₁, 53₂, 54₂) assurant l'interconnexion d'une des premières crémaillères (32₁, 32₂) avec une des secondes crémaillères (51₁, 51₂, 221₁, 221₂).

2. Dispositif d'obturation (1) selon la revendication 1, **caractérisé en ce que** lesdites secondes crémaillères (221₁, 221₂) sont orientées vers l'intérieur de ladite poignée (22), et **en ce qu'**une unique roue dentée (31₁, 31₂) assure l'interconnexion d'une des premières crémaillères (32₁, 32₂) avec une des secondes crémaillères (221₁, 221₂).

3. Dispositif d'obturation (1) selon la revendication 1, **caractérisé en ce que** lesdites secondes crémaillères (51₁, 51₂) sont orientées vers l'extérieur de ladite poignée (22), et **en ce qu'**au moins deux roues dentées (53₁, 54₁, 53₂, 54₂) en prise assurent l'interconnexion d'une des premières crémaillères (32₁, 32₂) avec une des secondes crémaillères (51₁, 51₂).

4. Dispositif d'obturation (1) selon la revendication 3, **caractérisé en ce qu'**au moins une première (53₁, 53₂) desdites roues dentées (53₁, 54₁, 53₂, 54₂) est une roue double, comprenant deux portions coaxiales (531₁, 532₁, 531₂, 532₂) présentant des diamètres et/ou des nombres de dents différents.

5. Dispositif d'obturation (1) selon l'une quelconque des revendications 1 à 4, **caractérisé en ce que** ledit panneau mobile (16) porte au moins une portion de cadre (17) s'étendant sensiblement entre les extrémités desdits pênes (24₁, 24₂), et présentant une ouverture sur sa face latérale s'étendant vers l'extérieur dudit panneau mobile (16) et/ou sur sa façade, permettant le déplacement de ladite poignée (22).

6. Dispositif d'obturation (1) selon la revendication 5, **caractérisé en ce que** ladite portion de cadre (17) porte, sur sa face latérale s'étendant vers l'intérieur dudit panneau mobile (16), au moins une zone de préhension complémentaire.

7. Dispositif d'obturation (1) selon l'une quelconque des revendications 1 à 6, **caractérisé en ce que** ledit panneau mobile (16) porte au moins un élément de guidage de ladite poignée (22) selon ladite direction d'actionnement.

8. Dispositif d'obturation (1) selon l'une quelconque des revendications 1 à 7, **caractérisé en ce qu'**il comprend des moyens de rappel agissant sur chacun desdits pênes (24₁, 24₂), et tendant à les ramener dans ladite position de verrouillage,
et **en ce que** lesdits moyens de transmission ramènent ladite poignée dans une position sortie, lorsque lesdits moyens de rappel ramènent lesdits pênes (24₁, 24₂) dans ladite position de verrouillage.

9. Véhicule automobile comprenant au moins un dispositif d'obturation (1) selon l'une quelconque des revendications précédentes.

## Patentansprüche

1. Vorrichtung zum Verschließen (1) einer Öffnung, die in einem Element einer Kraftfahrzeugkarosserie ausgebildet ist, umfassend einen festen Teil (11) und mindestens eine in Bezug zu dem festen Teil (11) bewegliche Platte (16), die von zwei Schienen (15₁, 15₂), die vom festen Teil (11) getragen werden, gleitend geführt wird,
wobei die bewegliche Platte (16) zwei Riegel (24₁, 24₂) trägt, die geeignet sind, mit zwei entsprechenden Anschlägen zusammenzuwirken, die jeweils in jeder der Schienen (15₁, 15₂) ausgebildet und in eine Entriegelungsrichtung senkrecht auf die Gleitrichtung der beweglichen Platte (16) zwischen einer Verriegelungsposition, in der die Riegel (24₁, 24₂) mit den Anschlägen in Eingriff sind, und einer Entriegelungsposition, die das Gleiten ermöglicht, in der die Riegel (24₁, 24₂) aus den Anschlägen herausgezogen sind, beweglich sind,
wobei die bewegliche Platte (16) einen Betätigungsgriff (22, 110) der Riegel (24₁, 24₂), der in eine Betätigungsrichtung parallel zur Gleitrichtung beweglich ist, und Winkelumlenkmittel umfasst, **dadurch gekennzeichnet, dass** die Winkelumlenkmittel mindestens ein Zahnrad (31₁, 31₂, 53₁, 54₁, 53₂, 54₂) einsetzen, um die Verlagerung eines der Riegel (24₁, 24₂) zu kontrollieren, und
dass jeder der Riegel (24₁, 24₂) mit einer ersten Zahnstange (32₁, 32₂) verbunden ist, die sich parallel zur Entriegelungsrichtung erstreckt, und dass der Griff (22) mit zwei zweiten Zahnstangen (51₁, 51₂, 221₁, 221₂) verbunden ist, die sich parallel zur Betätigungsrichtung erstrecken,
wobei mindestens ein Zahnrad (31₁, 31₂, 53₁, 54₁, 53₂, 54₂) die Verbindung einer der ersten Zahnstangen (32₁, 32₂) mit einer der zweiten Zahnstangen (51₁, 51₂, 221₁, 221₂) gewährleistet.

2. Vorrichtung zum Verschließen (1) nach Anspruch 1, **dadurch gekennzeichnet, dass** die zweiten Zahnstangen (221₁, 221₂) zum Inneren des Griffs (22) gerichtet sind, und dass ein einziges Zahnrad (31₁, 31₂) die Verbindung einer der ersten Zahnstangen (32₁, 32₂) mit einer der zweiten Zahnstangen (221₁, 221₂) gewährleistet.

3. Vorrichtung zum Verschließen (1) nach Anspruch 1, **dadurch gekennzeichnet, dass** die zweiten Zahnstangen (51₁, 51₂) nach außen zum Griff (22) gerichtet sind, und dass mindestens zwei Zahnräder (53₁, 54₁, 53₂, 54₂), die in Eingriff sind, die Verbindung einer der ersten Zahnstangen (32₁, 32₂) mit einer der zweiten Zahnstangen (51₁, 51₂) gewährleisten.

4. Vorrichtung zum Verschließen (1) nach Anspruch 3, **dadurch gekennzeichnet, dass** mindestens ein erstes (53₁, 53₂) der Zahnräder (53₁, 54₁, 53₂, 54₂) ein Doppelrad ist, umfassend zwei koaxiale Abschnitte (531₁, 532₁, 531₂, 532₂), die unterschiedliche Durchmesser und/oder Zahlen von Zähnen aufweisen.

5. Vorrichtung zum Verschließen (1) nach einem der Ansprüche 1 bis 4, **dadurch gekennzeichnet, dass** die bewegliche Platte (16) mindestens einen Rahmenabschnitt (17) trägt, der sich im Wesentlichen zwischen den Enden der Riegel (24₁, 24₂) erstreckt und eine Öffnung auf seiner Seitenfläche aufweist, die sich nach außen zur beweglichen Platte (16) und/oder auf ihrer Vorderfläche erstreckt, die die Verlagerung des Griffes (22) ermöglicht.

6. Vorrichtung zum Verschließen (1) nach Anspruch 5, **dadurch gekennzeichnet, dass** der Rahmenabschnitt (17) auf seiner Seitenfläche, die sich zum Inneren der beweglichen Platte (16) erstreckt, mindestens eine komplementäre Greifzone trägt.

7. Vorrichtung zum Verschließen (1) nach einem der Ansprüche 1 bis 6, **dadurch gekennzeichnet, dass** die bewegliche Platte (16) mindestens ein Führungselement des Griffs (22) in Betätigungsrichtung trägt.

8. Vorrichtung zum Verschließen (1) nach einem der Ansprüche 1 bis 7, **dadurch gekennzeichnet, dass** die Rückstellmittel umfasst, die auf jeden der Riegel (24₁, 24₂) einwirken und dazu neigen, sie in die Verriegelungsposition zurückzuführen,
und dass die Übertragungsmittel den Griff in eine Ausgangsposition zurückführen, wenn die Rückstellmittel die Riegel (24₁, 24₂) in die Verriegelungsposition zurückführen.

9. Kraftfahrzeug, umfassend mindestens eine Vorrichtung zum Verschließen (1) nach einem der vorhergehenden Ansprüche.

## Claims

1. Device for closing off (1) a bay formed in a bodywork element of a motor vehicle, comprising a fixed part (11) and at least one mobile panel (16) relative to said fixed part (11), the sliding of which is guided by two rails (15₁, 15₂) carried by said fixed part (11), said mobile panel (16) bearing two bolts (24₁, 24₂) capable of cooperating with two corresponding strikers, respectively formed in each of said rails (15₁, 15₂), and being mobile in a direction of unlocking perpendicular to the direction of sliding of said mobile panel (16), between a locked position in which said bolts (24₁, 24₂) are engaged with said strikers, and an unlocked position enabling sliding, in which said bolts (24₁, 24₂) are removed from said strikers,
said mobile panel (16) carrying an actuating handle (22,110) for actuating said bolts (24₁, 24₂), that is mobile in one direction of actuation parallel to said sliding direction, and angular transmission means
**characterized in that** angular transmission means implement at least one toothed wheel (31₁, 31₂, 53₁, 54₁, 53₂, 54₂) to control the movement of one of said bolts (24₁, 24₂), and
**in that** each of said bolts (24₁, 24₂) is fixedly attached to at least one first rack (32₁, 32₂) extending in parallel to said unlocking direction and said handle (22) is fixedly attached to two second racks (51₁, 51₂, 221₁, 221₂) extending in parallel to said direction of actuation, at least one toothed wheel (31₁, 31₂, 53₁, 54₁, 53₂, 54₂) providing for the interconnection of one of the first racks (32₁, 32₂) with one of the second racks (51₁, 51₂, 221₁, 221₂).

2. Device for closing off (1) according to claim1, **characterized in that** said second racks (221₁, 221₂) are oriented towards the interior of said handle (22) and **in that** a single toothed wheel (31₁, 31₂) provides for the interconnection of one of the first racks (32₁, 32₂) with one of the second racks (221₁, 221₂).

3. Device for closing off (1) according to claim 1, **characterized in that** said second racks (51₁, 51₂) are oriented towards the exterior of said handle (22) and in at least two toothed wheels (53₁, 54₁, 53₂, 54₂) provide for the interconnection of one of the first racks (32₁, 32₂) with one of the second racks (51₁, 51₂).

4. Device for closing off (1) according to claim 3, **characterized in that** at least a first (53₁, 53₂) of said toothed wheels (53₁, 54₁, 53₂, 54₂) is a double wheel comprising two coaxial portions (531₁, 532₁, 531₂, 532₂) having different tooth diameters and/or different numbers of teeth.

5. Device for closing off (1) according to any one of the claims 1 to 4, **characterized in that** said mobile panel (16) carries at least one frame portion (17) extending substantially between the ends of said bolts (24₁, 24₂) and having an aperture on its lateral face extending towards the exterior of said mobile panel (16) and/or on its front, enabling the moving of said handle (22).

6. Device for closing off (1) according to claim 5, **characterized in that** said frame portion (17) carries at least one complementary grasping zone on its lateral face extending towards the interior of said mobile panel (16).

7. Device for closing off (1) according to any one of the claims 1 to 6, **characterized in that** said mobile panel (16) carries at least one element for guiding said handle (22) in said direction of actuation.

8. Device for closing off (1) according to any one of the claims 1 to 7, **characterized in that** it comprises return means acting on each of said bolts (24₁, 24₂) and tending to bring them back into said locked position,
and **in that** said transmission means are adapted to bringing said handle into an exit position, when said return means bring said bolts (24₁, 24₂) back into said locked position.

9. Motor vehicle comprising at least one device for closing off (1) according to any one of the above claims.
